# EUROPEAN PATENT APPLICATION

(11) **EP 0 876 875 A1**
(43) Date of publication of application: **11.11.1998**
(21) Application number: 98201390.6
(22) Date of filing: 29.04.1998
(51) Int. Cl.: B24B 53/06, G05B 19/18, B24B 53/12

(54) **Dressing grinding wheels**

(30) Priority: 29.04.1997 NL 1005935
(71) Applicant: Geuzinge, Albert, 7891 GR Klazienaveen (NL); Geuzinge-Brinkers, Maria Katharina, 7891 GR Klazienaveen (NL)
(72) Inventor: Geuzinge, Albert, 7891 GR Klazienaveen (NL)
(74) Representative: Smulders, Theodorus A.H.J., Ir.

(57) **Abstract**

Dressing system with a dressing apparatus (1; 38) and an associated, grinding machine-independent CNC-control system (15; 43). The dressing apparatus (1; 38) has a stop (3) for positioning in abutment against a support (4) of a grinding machine, a tool holder (9) for accommodating a dressing tool (7) and a CNC-controllable drive structure (10, 11) and a guide structure (12, 13, 14) for moving the tool holder (9) in such a manner that the cutting position is movable with movement components in directions of at least two axes of a coordinate system. There is further described a grinding workshop having such dressing system and a method for using such dressing system. One such dressing system can be applied to a number of grinding machines, which may also or even exclusively include grinding machines which are not numerically controllable.

## Description

The invention relates to a dressing apparatus for dressing a grinding wheel mounted on a grinding machine, and to a dressing system with a grinding machine and such dressing apparatus. The invention moreover relates to a method of dressing grinding wheels and to a grinding workshop.

In European patent application 0 281 835, a CNC-controlled grinding machine with a dressing apparatus and a dressing system of the above-referenced type is described.

In this known CNC-controlled grinding machine, the dressing apparatus is numerically controllable for varying the angle between the dressing tool and the axis of the grinding wheel, to prevent the formation of undesired grooves in the grinding wheel. When a profile corresponding to the shape of products to be ground is provided in the grinding wheel by means of dressing, movements of the dressing tool fixedly mounted on the machine table are carried out by moving the machine table with numerical control.

Numerically controlled dressing offers the advantage that the profiling of the grinding wheel is accurately manageable, also if complicated forms are required. In particular, it is advantageous that grinding wheels having complicated profiles can be checked very rapidly, and that it yields a very constant result.

However, a problem is that grinding machines having numerical control are relatively costly.

In accordance with a possible alternative construction, the dressing apparatus is directly mounted on the housing of the grinding machine. For this, two further translatory adjusting axes are needed for performing the dressing operation. This involves a further increase of the costs.

The object of the invention is to enable numerically controlled dressing at lower costs.

To this end, the invention provides that a dressing apparatus as initially referred to is constructed according to the characterizing part of claim 1. For this purpose, the invention additionally provides that a dressing system as initially referred to is constructed according to the characterizing part of claim 5. Further, the invention may be embodied in a workshop arranged according to claim 10, and in a method according to claim 12.

By arranging the numerically controllable drive structure and the guide structure of the dressing apparatus so as to move the tool holder such that the cutting position is movable with movement components in directions of at least two axes of a coordinate system, a single such dressing apparatus can be used for a number of grinding machines which may partly, or even exclusively, be not numerically controllable. In this manner, grinding disks can successively be dressed with numerical control on different grinding machines - which need not be of a numerically controlled design - by means of a single, common dressing apparatus. Because particularly in the case of numerically controlled dressing, the dressing period is only a fraction of the grinding period, the use of the invention involves the possibility of one dressing apparatus serving a large number of grinding machines without this resulting in waiting periods for the dressing operation.

In this regard, it is noted that the limitation of machine table movements which is rendered possible due to the use of profile-ground grinding wheels, is highly advantageous particularly when applied to grinding machines whose mutual movements of machine table and grinding wheel are not numerically controllable, because during grinding on such grinding machines, complicated movement patterns of the machine table involve relatively much time and, accordingly, costs, as well as the risk of errors.

Further, the use of a central, numerically controlled dressing system more properly enables a central management of the specification of dressing profiles for different products to be manufactured, which is advantageous for realizing a constant quality.

Particular embodiments and elaborations of the invention are laid down in the dependent claims.

Hereinafter, further objects, constructions, effects and advantages of the invention will be specified on the basis of a presently most preferred exemplary embodiment and some alternatives, with reference to the accompanying drawings. In these drawings:
Fig. 1 is a diagrammatic side elevation of a dressing system according to the invention,
Fig. 2 is a cutaway top plan view of a dressing apparatus according to the invention,
Fig. 3 is a diagrammatic side elevation of a grinding machine having a dressing apparatus according to the invention mounted thereon, and
Fig. 4 is a diagrammatic representation of a grinding workshop arrangement according to the invention.

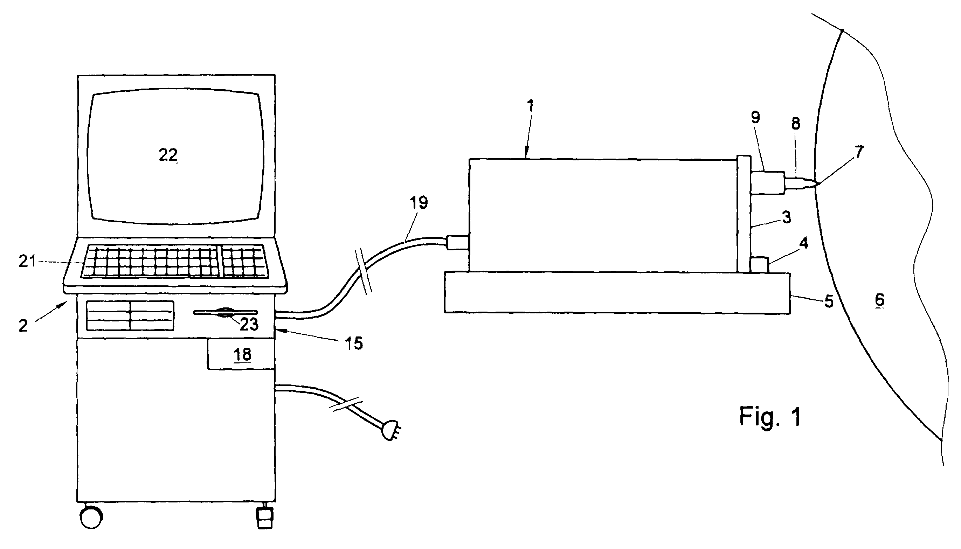

First, the invention will be discussed in more detail, with reference to the examples of a dressing apparatus and a dressing system as shown in Figs. 1-3.

The dressing system shown in Fig. 1 consists of a dressing apparatus 1 and a control and feed structure 2 connected thereto, with at least one dressing apparatus.

The dressing apparatus is shown in a condition in which it abuts by a stop 3 against a support 4 mounted on a machine table 5 of a grinding machine. This position is intended and suitable for dressing a grinding wheel 6 clamped on that grinding machine.

For dressing, a diamond is generally used as dressing tool. In the example shown, this diamond 7 is mounted in a setting 8 which, in turn, is clamped in a dressing tool holder 9 such that the diamond 7 is held in a predetermined cutting position.

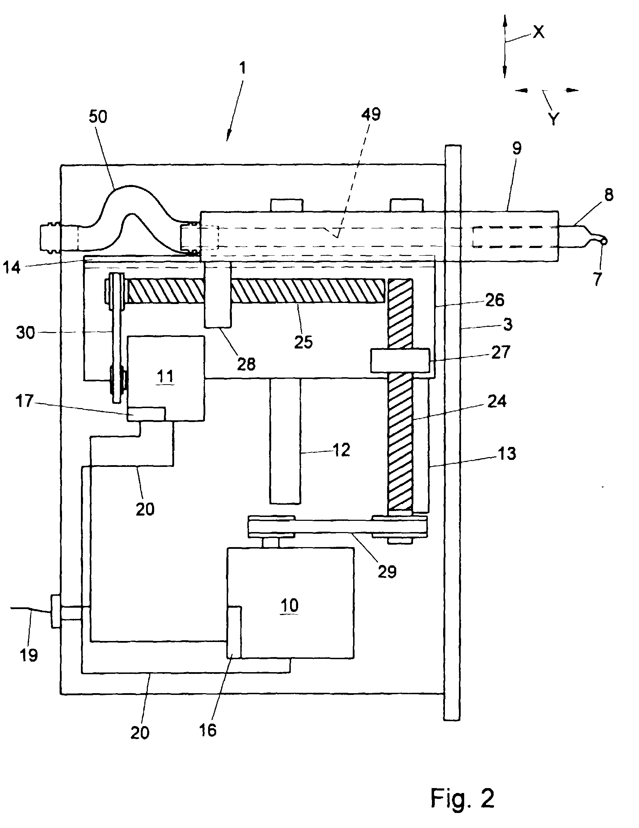

As shown in Fig. 2, the dressing apparatus 1 is provided with two CNC-controllable stepping motors 10, 11, constituting a CNC-controllable drive structure, and with two sets of guide rails 12, 13 and 14 constituting a guide structure for causing the dressing tool holder 9 to move relative to the stop 3 with movement components in directions of two axes X, Y of a coordinate system.

The control and feed structure 2 consists of a grinding machine-independent CNC-control system associated with the dressing apparatus 1, in the form of a computer system 15 with interfaces suitable for controlling motor controls 16, 17 of the drive structure to which it is connected via a cable 19, and of a power supply 18 having transformers and voltage regulators for feeding the control system and, via conductors 20, the motors 10, 11 of the dressing apparatus 1.

The dressing system described forms an independent whole, capable of functioning independently of the grinding machine on which a grinding wheel is to be dressed to the extent that the grinding machine only serves for holding the dressing apparatus 1 in position and for causing the grinding wheel 6 to rotate. Dressing the grinding wheel 6 on the grinding machine on which it remains clamped for grinding products offers the advantage of preventing the introduction of eccentricity when the products are reclamped on another machine.

With the dressing system and the dressing apparatus as proposed, it is possible to design a method for dressing grinding wheels, with grinding wheels being dressed with numerical control on two or more grinding machines, such that the dressing of the grinding wheels 6 on those two or more grinding machines is carried out by means of the same, common, numerically controlled, grinding machine-independent dressing apparatus 1 under control by an associated, grinding machine-independent control system 15. In addition to the cost saving that is rendered possible by dressing by means of a common dressing system, a probably even more important cost saving is realized in that the numerically controlled dressing can be performed on non-numerically controlled grinding machines. Particularly when products are ground on such grinding machines, a substantial increase of productivity is possible, if grinding wheels dressed to suitable profiles are used.

With the common, numerically controlled dressing system, the specifications of dressing profiles for different products from an assortment can readily be centrally managed, which is advantageous for realizing a constant quality.

The dressing apparatus can be directly clamped on the housing of the grinding machine or on the machine table 5, whichever is more convenient. However, the machine table 5 is especially suitable for clamping objects, is generally well-accessible and can also be utilized for bringing the dressing apparatus into a proper position before the dressing operation starts. Hence, in most cases, it is preferred that the dressing apparatus 1 be clamped on the machine table 5. During dressing, the machine table 5 is then fixedly held in one position.

For inputting processing data which define the shape of the profile to be provided in the grinding wheel, the proposed dressing system provides various inputting members associated with the dressing system, which inputting members are grinding machine-independent and are or at least can be coupled to the control system 15 for inputting processing data into the control system 15. Hence, also for inputting processing data, the dressing system is not dependent on the grinding machine on which a grinding wheel is to be dressed.

More in particular, the input members are formed by an operating interface consisting of a keyboard 21 and a display 22, permitting the desired processing data to be directly inputted into the dressing system or called from a memory. Further, an input member in the form of a disk drive 23 for diskettes is present, so that externally stored processing data can be processed as well. There may also be provided an interface for connecting the control system 15 to a network, such as a local network or a telephone network, for transmitting processing data or underlying product specifications to the control system 15 via that network.

As the dressing system is further provided with an associated, grinding machine-independent power supply 18, connected or at least connectable to the motors 10, 11 and to the control system 15, it is independent of the provisions of the grinding machines on which the grinding wheels 6 to be dressed are mounted, also as far as the energy supply to the motors 10, 11 and to the control system 15 is concerned.

To enable the dressing system to be readily displaced from one grinding machine to the other, the control system 15 is of mobile construction. Through the use of a portable computer, the control system 15 may even be of a more compact and more easily displaceable construction, but this involves the problem of a free surface having to be present at the location of the grinding machine on which a grinding wheel to be dressed is situated, on which free surface the control system can be disposed. This further involves a greater risk of damage by the computer system falling on the ground. Nevertheless, a more compact version of the control system may be advantageous, for instance if the numerically controlled dressing is offers as a service to different grinding workshops at different addresses, because the dressing system must then be taken along from one grinding workshop to the other.

The guide structure of the dressing apparatus 1 is arranged for guiding the tool holder 9 along two axes X, Y of a coordinate system. Although it is also possible to effect the desired movements in a plane spanned by these axes X, Y in another manner, for instance by combining two swivel movements along pole paths or by combining a swivel movement and a translating movement, the simplest and most direct management of the positions of the dressing tool 7 is obtained in this manner.

The two motors 10, 11 are coupled to two screw spindles 24, 25 directed parallel to the displacement axes X, Y. The first one of those screw spindles 24 engages a nut 27 of a slide 26 for displacing that slide 26 to and fro along that screw spindle 24. A second one of those screw spindles 25 is carried by the slide 26 and engages a nut 28 of the tool holder 9 for displacing the tool holder 9 to and fro along that second screw spindle 25. By the coupling of the motors 10, 11 to screw spindles 24, 25 extending parallel to these displacement axes X, Y, the movability of the dressing tool 7 along the X-axis and the Y-axis is readily obtained.

To enable the dressing apparatus to be used on as many different grinding machines as possible and to render the handling and clamping thereof as easy as possible, a compact construction of the dressing apparatus is desired. In the dressing apparatus 1 as proposed, a compact construction is inter alia obtained by the fact that the displaceable motor 11 of the two motors in a particular extreme position overlaps the fixedly mounted motor 10 in a direction parallel to the displacement direction of that displaceable motor 11. In Fig. 2, the overlap position is indicated by dot and dash lines.

By means of toothed-belt transmissions 29, 30, the motors 10, 11 are coupled to the screw spindles 24, 25. Because motors, screw spindle transmissions, guides and toothed-belt transmissions as shown are commercially available, a further description of these parts is dispensed with.

The tool holder is provided with a channel 49 for passing cooling liquid. The mouth of this channel is directed towards the tool position, so that the cooling liquid can always remain accurately directed to the operative portion of the cutting tool, regardless of the movements of the tool. For the feed of cooling liquid, a flexible line 50 extends through the dressing apparatus, which flexible line connects to a nipple 51 on the backside of the dressing apparatus 1. To this nipple, a hose for feeding cooling liquid can be connected. The cooling liquid feed is not of a grinding machine-independent design, because virtually every grinding machine is provided with means for feeding cooling liquid. In fact, air can also be used as cooling medium and fed via the same channel 49.

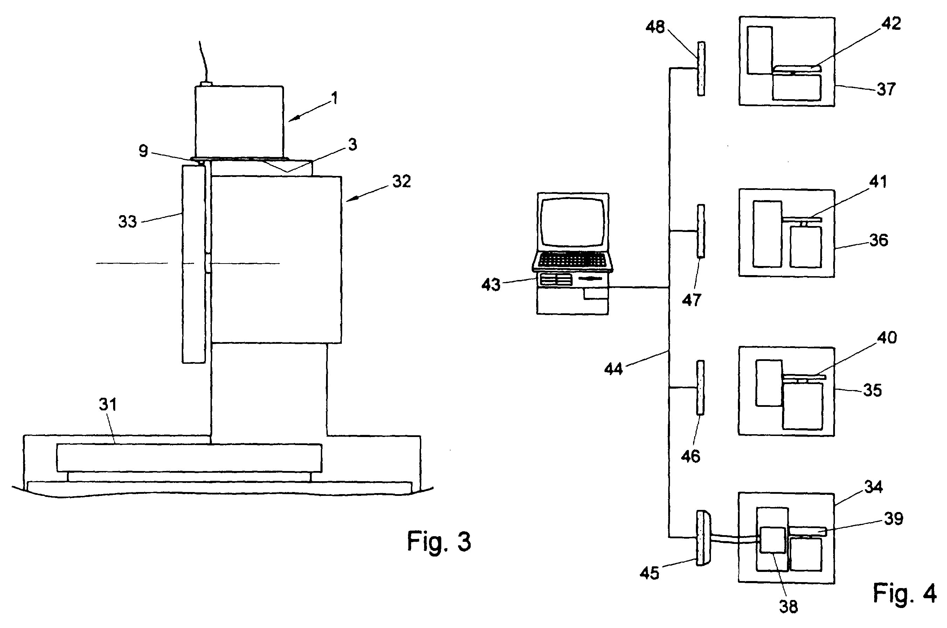

Fig. 3 shows the dressing apparatus in a different position, in which it is directly mounted on a housing 32 of a grinding machine, instead of on the machine table 31, for dressing a grinding disk 33.

The use of the proposed dressing system in a grinding workshop is possible with particular advantage if, as shown in Fig. 3, that grinding workshop is equipped with at least two grinding machines 34-37 and a dressing system having at least one common, mobile dressing apparatus 38 which is substantially constructed as proposed hereinabove, for dressing grinding disks 39-42 on those grinding machines 34-37, and an associated, grinding machine-independent control system 43 which is specifically arranged and connected, or at least connectable, for cooperation with the dressing apparatus 38.

Unlike the above-proposed dressing system, the control system is not mobile, but positioned in a fixed location. To enable controlling the dressing apparatus with the control system, a data transmission network 44 having connecting points 45-48 is provided. The connecting points 45-48 are each provided in the proximity of one of the grinding machines 34-37 for connecting the dressing apparatus 38 to the control system when mounted on the relevant grinding machine 34-37. In this manner, only the dressing apparatus 38 needs to be displaced from one grinding machine to the other for successively dressing grinding disks mounted on different grinding machines. In such dressing system, the dressing apparatus preferably comprises an operating member whereby the tool holder can be moved into a particular starting position and whereby it can be indicated that the tool has been moved into a starting position suitable for dressing, so that a dressing operation can begin.

From the foregoing, it will be readily understood by anyone skilled in the art that many other variants are possible within the framework of the present invention. For instance, the dressing apparatus may comprise a number of stops and flanges by means of which it can be clamped against the machine table or another part of the grinding machine. Further, an automatic tool changer as known per se may also be incorporated into the dressing apparatus.

## Claims

1. A dressing apparatus that can be attachably and detachably provided on a manually or CNC-controllable grinding machine for dressing a grinding wheel (6; 33; 39-42) mounted thereon, said dressing apparatus comprising a tool holder (9) arranged for accommodating a dressing tool (7) in a particular cutting position, and a CNC-controllable drive structure (10, 11) and a guide structure (12, 13, 14) for enabling moving the tool holder (9), after placement of the dressing apparatus on a grinding machine, relative to the grinding wheel with movement components in directions of at least two axes (X, Y) of a coordinate system, without using the movement structure of the grinding machine.

2. A dressing apparatus according to claim 1, wherein the guide structure (12, 13, 14) is arranged for guiding the tool holder (9) along at least two axes (X, Y) of a coordinate system.

3. A dressing apparatus according to claim 2, comprising at least two motors (10, 11) and at least two screw spindles (24, 25) directed parallel to said axes, wherein a first one of said screw spindles (24) engages a slide (26) for displacing said slide (26) to and fro along said screw spindle (24), wherein a second one of said screw spindles (25) is carried by said slide (26) and engages the tool holder (9) for displacing the tool holder (9) to and fro along said second screw spindle (25).

4. A dressing apparatus according to any one of the preceding claims, wherein the drive structure (10, 11) comprises a first motor (10) fixedly mounted relative to the stop (3) and a second motor (11), wherein said second motor (11) is displaceable to and fro relative to the stop (3) in displacement directions parallel to one of said axes (X) and overlaps said first motor (10) in at least one position in a direction parallel to the relevant displacement direction.

5. A dressing system having at least one dressing apparatus (1; 38), comprising:
a stop (3) for positioning in abutment against a support (4) of a grinding machine,
a tool holder (9) arranged for accommodating a dressing tool (7) in a particular cutting position, and
a CNC-controllable drive structure (10, 11) and a guide structure (12, 13, 14) for causing the tool holder (9) to move relative to the stop (3),
**characterized by**
an associated, grinding machine-independent CNC-control system (15; 43) specifically arranged and connected or at least connectable for cooperation with said drive structure (10, 11), wherein the drive structure (10, 11) and the guide structure (12, 13, 14) are arranged for moving the tool holder (9) relative to the stop (3) in such a manner that said cutting position is movable with movement components in directions of at least two axes of a coordinate system.

6. A dressing system according to claim 5, further comprising at least one associated, grinding machine-independent input member (21, 22; 23) which is or at least can be coupled to said control system (15; 43) for inputting processing data into said control system (15; 43).

7. A dressing system according to claim 6, wherein said at least one input member comprises an operating interface (21, 22).

8. A dressing system according to any one of claims 5-7, further comprising an associated, grinding machine-independent feed structure (18) connected or at least connectable to said motors (10, 11) and to said control system (15; 43).

9. A dressing system according to any one of claims 5-8, wherein said control system (15) is of mobile construction.

10. A grinding workshop provided with at least two grinding machines (34-37) and a dressing system having at least one common, mobile dressing apparatus (1; 38) for dressing grinding wheels (6; 33; 39-42) on said at least two grinding machines (34-37), and an associated, grinding machine-independent control system (15; 43) specifically arranged and connected or at least connectable for cooperation with said dressing apparatus (1; 38), wherein said dressing apparatus (1; 38) is provided with:
a stop (3) for positioning in abutment against a support (4) of a grinding machine,
a tool holder (9) arranged for accommodating a dressing tool (7) in a particular cutting position, and
a CNC-controllable drive structure (10, 11) and a guide structure (12, 13, 14) for causing the tool holder (9) to move relative to the stop (3), wherein the drive structure (10, 11) and the guide structure (12, 13, 14) are arranged for moving the tool holder (9) in such a manner that said cutting position is movable with movement components in directions of at least two axes (X, Y) of a coordinate system.

11. A grinding workshop according to claim 10, further comprising a data transmission network (44) having at least two connecting points (45-48) for connecting a dressing apparatus (38) and operatively connected to said control system (43).

12. A method for the numerically controlled dressing of grinding disks (6; 33; 39-42) on at least two grinding machines (34-37), wherein the dressing of grinding disks (6; 33; 39-42) on said at least two grinding machines (34-37) is successively carried out by means of the same common, numerically controlled, grinding machine-independent dressing apparatus (1; 38) under control by an associated, grinding machine-independent control system (15; 43).

13. A method according to claim 12, wherein the dressing apparatus (1; 38) for dressing a grinding disk (6; 33; 39-42) on at least one grinding machine is clamped on the machine table (5; 31) of said grinding machine, and the machine table (5; 31) is fixedly held in one position during dressing.
